# EUROPÄISCHE PATENTSCHRIFT

(11) **EP 3 023 242 B1**
(45) Veröffentlichungstag und Bekanntmachung des Hinweises auf die Patenterteilung: **14.06.2017**
(21) Anmeldenummer: 14194363.9
(22) Anmeldetag: 21.11.2014
(51) Int. Cl.: B32B 7/06, B32B 7/12, B32B 7/14, B65D 33/18

(54) **Verpackungsfolie sowie Vorrichtung und Verfahren zur Herstellung einer solchen**
Packaging film and device and method for manufacturing same
Feuille d'emballage ainsi que dispositif d'affichage et son procédé de fabrication

(43) Veröffentlichungstag der Anmeldung: 25.05.2016
(73) Patentinhaber: PETROPLAST GmbH Chemikalien und Kunststoffe, 41468 Neuss (DE)
(72) Erfinder: Gilka, Egbert, 40237 Düsseldorf (DE); Martin, Udo, 42553 Velbert (DE)
(74) Vertreter: Albrecht, Ralf

(56) Entgegenhaltungen:
- EP-A1- 1 783 059
- EP-A1- 2 551 211
- EP-A2- 0 827 912
- US-A- 5 078 509

## Beschreibung

Die Erfindung betrifft eine Verpackungsfolie, insbesondere zur Herstellung von Schlauchbeuteln..

Des Weiteren betrifft die Erfindung eine Vorrichtung zur Herstellung einer Verpackungsfolie, umfassend
- ein Gestell,
- zwei an dem Gestell parallel zueinander gehaltene Abwickelrollen, an denen jeweils eine Folienvorratsrolle mit einer ein- oder mehrschichtige Folienbahn abwickelbar gehalten werden kann,
- mehrere an dem Gestell gehaltene Führungsrollen, die ausgebildet sind, um die von den Folienvorratsrollen abgewickelten Folienbahnen durch die Vorrichtung zu führen, wobei die Abwickelrollen und die Führungsrollen derart angeordnet sind, dass die Folienbahnen parallel zueinander durch die Vorrichtung geführt werden und die Folienbahnen in ihren einander zugewandten inneren Randbereichen unter Bildung eines Überlappungsbereiches aufeinander gelegt werden,

- eine Verbindungseinrichtung, die ausgebildet ist, um die beiden Folienbahnen in dem Überlappungsbereich lösbar miteinander zu verbinden,
- eine Fördereinrichtung, um die Folienbahnen durch die Vorrichtung zu fördern, die insbesondere den Abwickelrollen und/oder den Führungsrollen zugeordnete Antriebseinheiten umfassen, durch welche die Rollen in eine vorgegebene Drehrichtung angetrieben werden.

Schließlich betrifft die Erfindung ein Verfahren zur Herstellung einer Verpackungsfolie, umfassend die Schritte
- zwei ein- oder mehrschichtige Folienbahnen werden auf zwei parallel zueinander angeordneten Folienvorratsrollen bereitgestellt,
- die Folienbahnen werden abgewickelt und mittels Führungsrollen derart geführt, dass sie in ihren einander zugewandten inneren Randbereichen unter Bildung eines Überlappungsbereiches aufeinandergelegt werden,
- die beiden Folienbahnen werden in dem Überlappungsbereich miteinander verbunden.

Aus dem Stand der Technik ist es bekannt, diverse Produkte mit Verpackungen aus Verpackungsfolien zu versehen. Bei derartigen Verpackungen, die insbesondere für Produkte aus dem Nahrungsmittelbereich zum Einsatz kommen, kann es sich beispielsweise um Schlauchbeutel oder dergleichen handeln.

Zum Verpacken von Produkten wird eine Verpackungsfolie, welche an wenigstens einer Seite eine Schicht aus siegelbarem Material aufweist, in einer geeigneten Verpackungsmaschine in Form einer auf eine Rolle aufgewickelten Bahn bereitgestellt. Mittels der Verpackungsmaschine wird die Verpackungsfolien-Bahn kontinuierlich abgewickelt, und die einzuhüllenden Produkte werden nacheinander jeweils auf einen Folien-Abschnitt geeigneter gelegt. Der Abschnitt wird zugeschnitten, die Verpackungsfolie wird um das Produkt herumgeschlagen und entlang einer sich in einer Längsrichtung der Verpackungsfolien-Bahn erstreckenden Längsnaht sowie entlang zweier sich orthogonal zu der Längsnaht erstreckenden Quernähte verschlossen. Dabei wird die Seite der Folie, welche die Schicht aus siegelbarem Material aufweist, zum Produkt hin orientiert. Diese bildet also die Innenseite der herzustellenden Verpackung. Das Verschließen erfolgt dann in der Regel, indem an den Verpackungsfolien im Bereich der aufeinanderliegenden siegelbaren Schichten an der Verpackungsinnenseite eine Siegelnaht in Längs- und zwei Siegelnähte in Querrichtung hergestellt werden.

Alternativ dazu, dass das Produkt auf die Verpackungsfolien-Bahn aufgelegt und diese in der vorgenannten Weise um das Produkt geschlagen wird, kann auch zunächst aus einem Verpackungsfolien-Bahn-Abschnitt geeigneter Größe ein an drei Seiten verschlossener Beutel hergestellt werden, indem entlang der Längs- und nur einer der Quernähte die Verpackungsfolie durch Siegeln verschlossen wird. Das Produkt kann dann in den noch offenen Beutel eingelegt und dieser abschließend entlang der zweiten Quernaht versiegelt werden. Diese Vorgehensweise eignet sich insbesondere, wenn eine Vielzahl kleiner Einzelprodukte, beispielsweise eine Vielzahl von Bonbons oder dergleichen in jeweils einem Beutel zu verpacken sind.

Derartige Verpackungen, insbesondere in Beutelform, haben sich vielfach bewährt. Die Produkte können auf einfache Weise unter Verwendung vergleichsweise wenig Verpackungsmaterial luftdicht eingehüllt und somit zuverlässig gegen äußere Einflüsse geschützt werden.

Um die aus einer Verpackungsfolie hergestellte Verpackung vorgenannter Art zu öffnen, muss ein Verbraucher diese jedoch vergleichsweise unkomfortabel aufreißen bzw. sie mit einer Schere aufschneiden, die nicht immer zur Hand ist. Dies wird teilweise als nachteilig empfunden.

Daher wurden die Verpackungsfolien dahingehend weiterentwickelt, dass diese nicht einteilig ausgebildet sind, sondern zwei ein- oder mehrschichtige Folienbahnen umfassen, die parallel zueinander ausgerichtet und derart angeordnet sind, dass ihre einander zugewandten inneren Randbereiche unter Bildung eines Überlappungsbereiches, in dem die Folienbahnen lösbar miteinander verbunden sind, aufeinanderliegen. An der fertigen Produktverpackung, die aus einer solchen weiterentwickelten Verpackungsfolie auf die zuvor beschriebene Weise hergestellt wird, dient der freie Endabschnitt des Überlappungsbereiches als Grifflasche für den Konsumenten. Diese kann der Benutzer bequem greifen, um die beiden Folienbahnabschnitte der Verpackung komfortabel auseinanderzuziehen, und an die beinhalteten Produkte zu gelangen.

Aus der US 5,078,509 geht ein Schlauchbeutel hervor, der eine Folienbahn umfasst, deren Endbereiche unter Bildung eines Überlappungsbereiches aufeinander liegen und in dem Überlappungsbereich durch eine Siegelnaht und einem Klebestreifen miteinander verbunden sind.

Die weiterentwickelten Verpackungsfolien der vorgenannten Art haben sich prinzipiell bewährt. Es besteht jedoch Bedarf daran, Verpackungsfolien bereitzustellen, aus denen Verpackungen für Produkte hergestellt werden können, die sich komfortabler öffnen und darüber hinaus zuverlässig wiederverschließen lassen können. Insbesondere im Bereich der Lebensmittelprodukte möchte der Konsument, wenn er den Inhalt einer Verpackung nach dem ersten Öffnen nicht vollständig verzehrt, die Verpackung auf einfache Weise wieder möglichst dicht verschließen können, um den verbleibenden Inhalt zu schützen.

Ausgehend von dem vorgenannten Stand der Technik besteht daher Bedarf daran, eine Verpackungsfolie bereitzustellen, aus welcher Verpackungen, insbesondere Schlauchbeutel gefertigt werden können, die sich durch eine besonders komfortabel herzustellende sowie nach dem ersten Öffne zuverlässig wieder zu verschließende Öffnung auszeichnen. Darüber hinaus ist es eine Aufgabe der vorliegenden Erfindung, eine Vorrichtung sowie ein Verfahren zur Herstellung einer derartigen Verpackungsfolie anzugeben.

Die vorgenannte Aufgabe wird gelöst durch eine Verpackungsfolie nach Anspruch 1.

Der vorliegenden Erfindung liegt mit anderen Worten die Idee zugrunde, eine Kombination aus einem Siegelstreifen sowie einem benachbarten Klebestreifen einzusetzen, um eine Verpackungsfolie zu erhalten, aus welcher insbesondere luftdichte Produktverpackungen hergestellt werden können, die sich gleichzeitig durch eine ohne Hilfsmittel komfortabel aufreißbare sowie wiederverschließbare Öffnung auszeichnen.

Der Überlappungsbereich wird bei der erfindungsgemäßen Verpackungsfolie gebildet, indem die beiden parallel verlaufenden Folienbahnen in an sich bebekannter Weise versetzt zueinander angeordnet sind und teilweise, nämlich an ihren inneren Randbereichen, überlappen.

In dem Überlappungsbereich sind zwischen den beiden Folienbahnen nebeneinanderliegend der Siegel- und der Klebestreifen aus einem Hotmelt-Material vorgesehen. Die beiden Streifen erstrecken sich parallel zueinander und in Längsrichtung der Folienbahnen, wobei zu beachten ist, dass diese nicht mit der Längsrichtung einer aus der erfindungsgemäßen Verpackungsfolie hergestellten Verpackung zusammenfallen muss. Vielmehr kann die Verpackung auch quer zur Längsrichtung der Folienbahnen eine größere Ausdehnung aufweisen als in Längsrichtung der Folienbahnen.

Bei dem Siegel- und dem Klebestreifen handelt es sich jeweils um einen streifenförmigen Auftrag eines Siegel- bzw. Klebematerials. Zur Herstellung des Klebestreifens wird ein Hotmelt-Kleber, der auch als Schmelzklebstoff bezeichnet wird, verwendet. Dieser wird auf eine der beiden Folienbahnen in dem inneren Randbereich aufgebracht, insbesondere aufgesprüht. Zweckmäßiger Weise erfolgt die Aufbringung von oben auf die untere der beiden Folienbahnen. In gleicher Weise wird der Siegelstreifen hergestellt, indem ein Siegelmaterial insbesondere auf die gleiche Folienbahn und benachbart zu dem Klebestreifen aufgebracht, bevorzugt aufgesprüht wird.

Die Kombination aus einem Siegel- und einem benachbarten Klebstreifen in dem Überlappungsbereich hat sich als besonders geeignet erwiesen, um eine Verpackung mit einer leicht zu öffnenden sowie leicht wieder zu verschließenden Öffnung bereitzustellen. Dabei gewährleistet der Siegelstreifen, dass die herzustellende Verpackung in dem Bereich, in dem später von einem Konsumenten durch Aufreißen die Öffnung hergestellt wird, bis zu dem ersten Öffnen zuverlässig, insbesondere luftdicht verschlossen ist. Der sich neben dem Siegelstreifen erstreckende Klebestreifen aus einem Hotmelt-Material sorgt dafür, dass die einmal in der Verpackung hergestellte Öffnung zum Schutz derjenigen Produkte bzw. Produktteile, die nicht unmittelbar nach dem ersten Öffnen entnommen oder in die Verpackung zurückgelegt werden, auf komfortable Weise wieder verschlossen werden kann.

Um ein Produkt aus einer Verpackung aus der erfindungsgemäßen Verpackungsfolie zu entnehmen greift der Konsument das freie Ende des Überlappungsbereichs, also die Grifflasche, und zieht die obere Folienbahn von der unteren ab. Hierdurch wird die im Bereich des Klebestreifens bestehende Klebeverbindung gelöst und die im Bereich des Siegelstreifens bestehende Siegelung wird durchbrochen. Nach der Produktentnahme kann der Konsument die Verpackung auf komfortable Weise wiederverschließen, indem er die obere Folienbahn in dem Überlappungsbereich einfach auf die untere Folienbahn drückt, wodurch diese wieder in Kontakt mit dem dort befindlichen Klebestreifen kommt.

Prinzipiell sind verschiedene Folienmaterialien geeignet, um für die Herstellung der erfindungsgemäßen Verpackungsfolie als Folienbahn zum Einsatz zu kommen. Als Beispiel sei eine Polyolefin-Mehrschichtfolie genannt. In der Regel kommen Folienbahnen zum Einsatz, die an einer ihrer beiden Seiten eine Schicht aus einem siegelbaren Material aufweisen und zwar an denjenigen Seiten, welche später die Innenseite einer aus der Produktverpackung bilden. Die Folienbahnen weisen in diesem Fall beide an ihrer Oberseite oder beide an ihrer Unterseite die Schicht aus dem siegelbarem Material auf, je nachdem, ob die Oberseite oder die Unterseite der beiden Folienbahnen später die Innenseite der Verpackung bildet. Nachdem zur Herstellung einer Produktverpackung ein Abschnitt der erfindungsgemäßen Verpackungsfolie zu einer Beutelform gefaltet wurde, liegen die siegelbaren Schichten der beiden Folienbahnen innenseitig aufeinander und es können in an sich bekannter Weise drei Siegelnähte, insbesondere zwei Quer- und eine Längssiegelnaht, an den Außenkanten des Beutels hergestellt werden, um einen umseitig verschlossenen Folienbeutel aus der erfindungsgemäßen Verpackungsfolie zu erhalten.

In dem Überlappungsbereich der erfindungsgemäßen Verpackungsfolie liegen dann die siegelbare Schicht der einen Folienbahn und die nicht siegelbare Schicht der anderen Folienbahn aufeinander. Eine Herstellung einer Siegelnaht durch Aufbringung von Druck und Wärme, wie sie außerhalb des Überlappungsbereiches, wo die beiden siegelbaren Schichten aufeinanderliegen problemlos möglich ist, kann in der Regel nicht erzielt werden. Erfindungsgemäß ist in diesem Bereich ein Streifen aus einem Siegelmaterial vorgesehen, der die siegelbare und die nicht siegelbare Schicht miteinander verbindet. Der Siegelstreifen ist zweckmäßiger Weise zu der Kante derjenigen Folienbahn benachbart, die zu der späteren Verpackungsinnenseite gewandt ist, also der Kante der unteren Folienbahn. Es ist ferner bevorzugt, dass der Siegelstreifen so nah wie möglich an der Kante dieser Folienbahn liegt, um zu verhindern, dass im Bereich der Quersiegelnähte, die später für die Verpackungsfertigung hergestellt werden zwischen dem Siegelstreifen und der benachbarten Randkante unversiegelte, zu dem Verpackungsinnenraum hin offene Abschnitte verbleiben.

Gemäß einer Ausführungsform der erfindungsgemäßen Verpackungsfolie ist vorgesehen, dass der Siegelstreifen von einer benachbarten Randkante einer Folienbahn einen Abstand von maximal 2 mm, insbesondere von maximal 1 mm, bevorzugt von maximal 0,5 mm und besonders bevorzugt von maximal 0,2 mm aufweist. Diese Maximalabstände des Siegelstreifens von der zu diesem benachbarten Randkante, bei der es sich im zuvor beschriebenen Sinne zweckmäßiger Weise um die Randkante der zur Verpackungsinnenseite gewandten Folienbahn handelt, haben sich als besonders geeignet erwiesen, um Verpackungen ausreichender Dichtheit aus der erfindungsgemäßen Verpackungsfolie herstellen zu können.

Eine weitere Ausführungsform der Erfindung zeichnet sich dadurch aus, dass in dem Überlappungsbereich zwischen den Folienbahnen ein sich parallel zu dem Siegelstreifen erstreckender Dichtstreifen aus einem Siegelmaterial, insbesondere einem Siegellack vorgesehen ist, der sich bis zu der dem Siegelstreifen benachbarten Randkante erstreckt, wobei der Dichtstreifen insbesondere durch Aufdrucken auf eine der Folienbahnen hergestellt ist.

Ein Dichtstreifen kann auf besonders zuverlässige Weise verhindern, dass im Bereich der Quersiegelnähte, die später für die Verpackungsfertigung hergestellt werden zwischen dem Siegelstreifen und der benachbarten Randkante unversiegelte, zu dem Verpackungsinnenraum hin offene Abschnitte verbleiben. Hierzu erstreckt sich der Dichtstreifen bis zu der Randkante der Folienbahnen, welche zu dem Siegelstreifen benachbart ist, also derjenigen, Randkante, welche an der fertigen, aus der erfindungsgemäßen Verpackungsfolie hergestellten Verpackung zur Verpackungsinnenseite weist. Ist zusätzlich zu dem Siegelstreifen ein auf diese Weise positionierter Dichtstreifen vorgesehen, der sich bis zu der Randkante erstreckt, so ist es nicht unbedingt erforderlich, dass der Siegelstreifen so nah wie möglich an der benachbarten Randkante liegt. Werden die Quernähte für die Herstellung einer Verpackung erzeugt, so schließt der Dichtstreifen die Verpackung bis zu der zu dem Siegelstreifen benachbarten Randkante, falls dieser sich nicht nah genug bis an die Randkante erstreckt. Ein zusätzlicher Dichtstreifen ist daher insbesondere dann vorteilhaft, wenn der Siegelstreifen auf eine Weise hergestellt wird, bei der ein Abstand zur Randkante fertigungsbedingt verbleibt.

Der Dichtstreifen ist mittels eines Fertigungsverfahrens herzustellen, welches einen Auftrag des Siegelmaterials, insbesondere Siegellacks bis zu der Randkante hin ermöglicht. Hierfür eignet sich beispielsweise das Aufbringen mittels einer Druckeinrichtung, insbesondere eines Druckwerks, mit welchem das Siegelmaterial auf eine der beiden Folienbahnen aufgedruckt wird.

Der Dichtstreifen erstreckt sich in dem Überlappungsbereich quer zur Längsrichtung der Folienbahnen von der dem Siegelstreifen benachbarten Randkante zum Inneren des Überlappungsbereiches, wobei der Dichtstreifen mindestens so breit ist, dass ein gegebenenfalls vorhandener Abstand zwischen Siegelstreifen und Randkante zur Gewährleistung der Dichtheit vollständig abgedeckt ist. Der Dichtstreifen hat beispielsweise eine Bereite von wenigstens 1 mm, bevorzugt von wenigstens 2 mm. Es ist auch möglich, dass sich der Dichtstreifen über die gesamte Breite des Überlappungsbereiches erstreckt.

Eine weitere Ausführungsform der erfindungsgemäßen Verpackungsfolie zeichnet sich ferner dadurch aus, dass der Klebestreifen von einer benachbarten Randkante einer Folienbahn einen Abstand von 1 cm bis 4 cm, insbesondere von 1,5 cm bis 3 cm, bevorzugt von 1,8 cm bis 2,2 cm aufweist. Die zu dem Klebestreifen benachbarte Randkante ist zweckmäßigerweise diejenige, welche an einer aus der Verpackungsfolie hergestellten Produktverpackung nach außen weist, also die Randkante der in dem Überlappungsbereich oberen Folienbahn. Der sich von der äußeren Randkante dieser Folienbahn bis zu dem Klebestreifen erstreckende Abschnitt liegt lose auf der unteren Folienbahn auf und kann von einem Benutzer gegriffen werden, um die Produktverpackung komfortabel aufzureißen. Der Abschnitt dient folglich als Grifflasche und er hat bevorzugter Weise eine Breite von 1 cm bis 4 cm, insbesondere von 1,5 cm bis 3 cm, bevorzugt von 1,8 cm bis 2,2 cm.

Diese Breiten haben sich als besonders geeignet für eine Grifflasche erwiesen, die bequem von einem Benutzer gegriffen werden kann.

In Weiterbildung der erfindungsgemäßen Verpackungsfolie ist ferner vorgesehen, dass der Überlappungsbereich eine Breite von 3 cm bis 7 cm, insbesondere von 3,5 cm bis 6 cm, bevorzugt von 4 cm bis 5 cm aufweist. Weist der Überlappungsbereich eine Breite in den vorgenannten Bereichen auf, so ist sichergestellt, dass ausreichend Platz für den in diesem liegenden Siegelstreifen, den benachbarten Klebestreifen, sowie eine Grifflasche komfortabler Größe besteht.

Weiterhin kann vorgesehen sein, dass der Siegelstreifen und/oder der Klebestreifen eine Dicke von 20 µm bis 100 µm, insbesondere von 40 µm bis 90 µm, bevorzugt von 75 µm bis 85 µm aufweist und/oder dass der Siegelstreifen und/oder der Klebestreifen eine Breite von 3 mm bis 10 mm, insbesondere von 4 mm bis 7 mm, bevorzugt von 4,5 mm bis 5,5 mm aufweist.

Die Erfindung sieht weiterhin vor, dass es sich bei dem Siegelstreifen um einen insbesondere durch Aufsprühen hergestellten Hotmelt-Streifen handelt und/oder der Siegelstreifen peelfähig ausgebildet ist. Ein Hotmelt-Siegelmaterial hat sich für die Herstellung eines Siegelstreifens als besonders geeignet erwiesen. Ein besonders komfortables Öffnen einer Verpackung aus der erfindungsgemäßen Verpackungsfolie ist ferner möglich, wenn der Siegelstreifen peelfähig ausgebildet ist. Insbesondere für ältere Menschen ist es hilfreich, wenn kein allzu großer Kraftaufwand erforderlich ist, um die beiden Folienbahnen in dem Überlappungsbereich von Hand auseinanderzuziehen, was durch die Peelfähigkeit gewährleistet wird.

Es kann darüber hinaus vorgesehen sein, dass es sich bei dem Klebestreifen um einen durch Aufsprühen hergestellten Klebestreifen handelt.

Prinzipiell können das Hotmelt-Klebematerial und auch das Siegelmaterial im Rahmen der Herstellung der erfindungsgemäßen Verpackungsfolie auf beliebige Weise aufgebracht werden. Das Aufbringen des Siegel- und/oder Klebematerials erfolgt zur Realisierung hoher Herstellungsgeschwindigkeiten zweckmäßiger Weise automatisiert unter Verwendung geeigneter Mittel.

Insbesondere das Aufbringen durch Aufsprühen hat sich als geeignet erwiesen, um hohe Fertigungsgeschwindigkeiten zu realisieren. Es ermöglicht darüber hinaus eine besonders präzise Dosierung der Materialmenge und auch die Fläche, auf welche das Material auf die insbesondere an einer zum Einsatz kommenden Siegel- und Klebestation vorbeilaufende Folienbahn aufgebracht wird, ist beim Aufsprühen besonders präzise einstellbar. Im Ergebnis kann die Position und die Breite des Siegel- und des Klebestreifens mit besonders hoher Genauigkeit gewählt werden. Eine möglichst präzise Positionierung ist insbesondere für den Siegelstreifen sehr zweckmäßig, da eine hohe Dichtheit der späteren Verpackungen besonders zuverlässig gewährleistet wird, wenn die Siegelung - wie vorstehend beschrieben - in dem Überlappungsbereich möglichst nah an der zur späteren Verpackungsinnenseite weisenden Randkante der unteren bzw. inneren Folienbahn platziert wird.

Das Siegel- und das Klebematerial wird zur Herstellung der beiden Streifen beispielsweise mittels einer Siegelstation und einer Klebestation aufgebracht, bevorzugt aufgesprüht, während eine der beiden Folienbahnen an den Stationen vorbei gefördert wird. Nach der Aufbringung des Siegel- und des Klebematerials auf die erste Folienbahn, insbesondere auf die untere Folienbahn, wird die zweite Folienbahn in dem Überlappungsbereich auf die erste gelegt und die Folienbahnen werden für deren Verbindung in an sich bekannter gegeneinander verpresst.

Da im Rahmen des Herstellungsprozesses der erfindungsgemäßen Verpackungsfolie die beiden Folienbahnen in dem Überlappungsbereich verpresst werden, ist es nicht erforderlich, dass das Siegelmaterial zur Herstellung des Siegelstreifens derart aufgebracht wird, dass sich der Siegelstreifen unmittelbar entlang der zu diesem benachbarten Randkante erstreckt. Durch das Verpressen der beiden Folienbahnen wird das aufgebrachte Siegelmaterial seitlich verteilt und eine ggf. bis zu der Randkante bestehende Lücke kann geschlossen werden, so dass sich der Siegelstreifen in der fertigen Verpackungsfolie entlang der benachbarten Randkante erstreckt. Der Abstand, in dem das Siegelmaterial zu der benachbarten Randkante auf die Folienbahn aufgebracht wird, ist jedoch bevorzugt auf das fertigungstechnisch erzielbare Minimum eingestellt, um eine Dichtheit möglichst zuverlässig zu gewährleisten.

Dabei ist es möglich, dass der Siegelstreifen in der fertig hegestellten erfindungsgemäßen Verpackungsfolie in einem geringen Abstand zu der benachbarten Randkante der entsprechenden Folienbahn vorgesehen ist. Wenn dann im Rahmen des Herstellungsprozesses einer Verpackung, insbesondere eines Schlauchbeutels, aus der erfindungsgemäßen Verpackungsfolie Quernähte hergestellt werden, indem die innenseitig aufeinanderliegenden Schichten aus siegelbarem Material im Bereich der Nähte erhitzt und verpresst werden, geht das Siegelmaterial wieder in den flüssigen Zustand über und es wird seitlich bis zu der benachbarten Randkante hin verteilt. Das Siegelmaterial des Siegelstreifens erstreckt sich in diesem Falle dann erst bei der fertigen Verpackung bis zu der zu dem Siegelstreifen benachbarten Randkante und zwar im Bereich der Quernähte.

Für eine besonders zuverlässige Dichtheit kann, wie vorstehend beschrieben, auch ein insbesondere aufgedruckter Dichtstreifen z.B. aus einem Siegellack vorgesehen sein, der sich bis zu der dem Siegelstreifen benachbarten Randkante erstreckt.

Die vorstehend genannte Aufgabe wird ferner bei einer Vorrichtung der eingangs genannten Art dadurch gelöst, dass die Verbindungseinrichtung umfasst
- eine Siegel- und eine Klebestation, die ausgebildet sind, um auf den inneren Randbereich einer der Folienbahnen, insbesondere der unteren Folienbahn, nebeneinanderliegend einen Klebestreifen aus einem Hotmelt und einen Siegelstreifen aufzubringen, insbesondere aufzusprühen, die sich parallel zueinander in Längsrichtung der Folienbahnen erstrecken, und
- eine der Siegel- und der Klebestation nachgeordnete Pressstation mit zwei unter Bildung eines Pressspaltes parallel zueinander angeordnete Pressrollen, wobei die Pressstation derart ausgebildet und positioniert ist, dass die Folienbahnen durch den Pressspalt geführt und so in dem Überlappungsbereich gegeneinander verpresst werden.

Eine erfindungsgemäße Verpackungsfolie mit einem Siegel- und einem Klebestreifen zwischen den beiden Folienbahnen in dem Überlappungsbereich kann unter Verwendung einer Vorrichtung, die sich durch die vorstehenden Merkmale auszeichnet, auf einfache und kostengünstige Weise hergestellt werden.

Das Auflegen des Randbereiches der zweite, insbesondere oberen Folienbahn auf den inneren Randbereich der ersten, insbesondere unteren Folienbahn, auf welche das Siegel- und das Klebematerial mittels der Siegel- und der Klebestation aufgebracht wurde sowie das Verpressen der beiden Folienbahnen in dem Überlappungsbereich erfolgt zweckmäßiger Weise zeitnah im Anschluss an das Aufbringen des Klebe- und des Siegelmaterials. So ist gewährleistet, dass die aufgebrachten, insbesondere aufgesprühten Materialen noch heiß und/oder flüssig sind, wenn die zweite Folienbahn in dem Überlappungsbereich auf die erste gelegt und die Folienbahnen anschließend in der Pressstation gegeneinander verpresst werden. Das Auflegen der zweiten Folienbahn auf die erste kann insbesondere auch unmittelbar im Bereich des Pressspaltes erfolgen, also die zweite Folienbahn kann über eine der Pressrollen der Pressstation auf die erste Folienbahn gefädelt werden.

Es ist möglich, dass die Pressrollen beheizbar ausgestaltet sind, damit während des Verpressens auch eine Erhitzung erfolgt.

Die Zeit, welche zwischen dem Aufbringen des Siegel- und Klebematerials sowie dem Aufeinanderlegen und Verpressen der Folienbahnen maximal vergehen sollte liegt beispielsweise im Bereich von nur wenigen Millisekunden. Die Zeit wird minimiert, indem der Abstand in Laufrichtung der Folie zwischen der Siegel- sowie Klebestation und der Stelle, an welcher aufgelegt und verpresst wird minimiert und die Laufgeschwindigkeit der Folienbahnen durch die Vorrichtung maximiert wird. Eine hohe Laufgeschwindigkeit ist auch wünschenswert, um möglichst viele Meter der erfindungsgemäßen Verpackungsfolie mit vergleichsweise geringem Zeitaufwand zu produzieren.

Die erfindungsgemäße Vorrichtung kann sich in Weiterbildung dadurch auszeichnen, dass eine der Verbindungseinrichtung nachgeordnete Aufwickelrolle vorgesehen ist, die derart angeordnet und ausgebildet ist, dass die beiden Folienbahnen im miteinander verbundenen Zustand auf die Aufwickelrolle aufgewickelt werden. Die durch Aufwickeln der erfindungsgemäßen Verpackungsfolie erhaltene Verpackungsfolienrolle kann in an sich bekannter Weise platzsparend gelagert und effizient transportiert werden.

Darüber hinaus kann die Vorrichtung Führungsmittel umfassen, um die Folienbahnen und/oder die Einlegefolienbahnen insbesondere außenseitig zu führen. Hierdurch ist gewährleistet, dass die Folienbahn präzise durch die erfindungsgemäße Vorrichtung gefördert werden und der Siegelstreifen und der Klebestreifen zuverlässig an den für diese vorgesehenen Positionen in den Überlappungsbereich aufgebracht.

Eine weitere vorteilhafte Ausführungsform der erfindungsgemäßen Vorrichtung zeichnet sich ferner dadurch aus, dass die Abwickelrollen und/oder die Führungsrollen und/oder die Aufwickelrolle und/oder die weitere Abwickelrolle seitlich positionierbar an dem Gestell gehalten sind. Mit der seitlichen Positionierung der Rollen kann insbesondere die Breite des Überlappungsbereiches variiert und die Vorrichtung kann an unterschiedliche Breiten der Folienbahnen angepasst werden. Somit können im Ergebnis Verpackungsfolien unterschiedlicher Dimensionierung erhalten werden.

Darüber hinaus kann vorgesehen sein, dass die beiden Pressrollen zur Einstellung einer Pressspaltdicke an dem Gestell aufeinander zu und voneinander weg bewegbar gehalten sind. Die Einstellbarkeit des Abstandes der Pressrollen dient in erster Linie der Anpassung der Vorrichtung an unterschiedlich Dicke Folienbahnen sowie der Variation des Pressdruckes.

Eine weitere Ausführungsform zeichnet sich schließlich dadurch aus, dass die Siegelstation und die Klebestation in einer Längsrichtung der Folienbahnen und/oder quer zu einer Längsrichtung der Folienbahnen versetzt zueinander angeordnet sind und insbesondere die Siegelstation und die Klebestation in einer Längsrichtung der Folienbahnen und/oder quer zu einer Längsrichtung der Folienbahnen bewegbar gehalten sind, wobei bevorzugt die Siegel- und die Klebestation jeweils einen Sprühkopf zum Aufsprühen des Siegel- bzw. Klebematerials aufweisen und die beiden Sprühköpfe in einer Längsrichtung der Folienbahnen und/oder quer zu einer Längsrichtung der Folienbahnen bewegbar gehalten sind. Durch den Versatz quer zur Längsrichtung der Folienbahnen wird dabei erreicht, dass die beiden Streifen nebeneinanderliegend auf die Folienbahn aufgebracht werden. Der Versatz in Längsrichtung verschafft den nötigen Platz für die beiden Stationen.

Es kann ferner gemäß dieser Ausgestaltung der erfindungsgemäßen Vorrichtung entweder die ganze Siegel- und/oder die ganze Klebestation bewegbar an dem Gestell der Vorrichtung gehalten sein, um die genaue Position des herzustellenden Siegel- und Klebestreifens an der Folienbahn einzustellen. Alternativ reicht es für den Fall, dass die beiden Stationen jeweils einen Sprühkopf aufweisen, über welchen das Siegel- und das Klebematerial auf eine der beiden Folienbahnen aufgesprüht wird aus, wenn lediglich die Sprühköpfe, die beispielsweise zur Zuführung des flüssigen, heißen Siegel-und Klebematerials über einen flexible Schlauch mit den verbleibenden Komponenten der jeweiligen Station verbunden sind, relativ zu den Folienbahnen bewegbar gehalten sind.

Darüber hinaus kann eine der Verbindungseinrichtung vorgeschaltete Druckeinrichtung vorgesehen sein, die ausgebildet und angeordnet ist, um einen sich in Längsrichtung der Folienbahnen erstreckenden Dichtstreifen aus einem Siegelmaterial, insbesondere einem Siegellack, auf eine der Folienbahnen aufzudrucken, der sich bis zu einer Randkante der Folienbahnen erstreckt und/oder es kann eine der Verbindungseinrichtung vorgeschaltete Aufrauhungseinrichtung vorgesehen sein, die ausgebildet und angeordnet ist, um wenigstens eine der Folienbahnen in dem Überlappungsbereich zur Erhöhung der Oberflächenspannung aufzurauhen .

Die Druckeinrichtung, bei welcher es sich beispielsweise um eine Druckwerk handelt, dient der Aufbringung eines Dichtstreifens, der auf die zuvor beschriebene Weise eine besonders hohe Dichtheit der Verpackungen gewährleistet, die aus der erfindungsgemäßen Folie gefertigt werden.

Mittels der Aufrauhungseinrichtung wird wenigstens eine der Folienbahnen in dem Überlappungsbereich zur Erhöhung der Oberflächenspannung aufgerauht. Dies ist insbesondere für den Fall zweckmäßig, dass die Folienbahnen an einer Seite ein Material mit vergleichsweise geringer Oberflächenspannung aufweisen, auf welchem Hotmelt-Materialien gegebenenfalls nicht gut haften. Durch das Aufrauhen, welches an der Oberfläche wenigstens einer Folienbahn erfolgen kann, wird die Haftung der Hotmelt-Materialien des Klebe- und ggf. Siegelstreifens erhöht. Als Aufrauhungseinrichtung kann beispielsweise eine Corona-Anlage zum Einsatz kommen.

Die erfindungsgemäße Vorrichtung zur Herstellung einer Verpackungsfolie umfasst weiterhin zweckmäßiger Weise eine zentrale Steuerungseinrichtung. Über diese werden insbesondere der Abwickelvorgang der Folienbahnen von den Vorratsrollen und/oder deren Transport durch die Vorrichtung mittels der Führungsrollen und/oder deren Laufgeschwindigkeit und/oder die Zufuhr des Siegel- und des Klebematerials über die entsprechenden Stationen, insbesondere die Zufuhrmenge pro Zeit sowie Streifenbreite gesteuert. Darüber hinaus kann die Steuereinrichtung auch zum Einsatz kommen, um den Abwickelvorgang der Einlegefolienstreifen, den Aufwickelvorgang der fertigen Verpackungsfolie, die Druck. und die Aufrauhungseinrichtung zu steuern.

Schließlich wird die vorgenannte Aufgabe bei einem Verfahren der eingangs genannten Art dadurch gelöst, dass die beiden Folienbahnen in dem Überlappungsbereich miteinander verbunden werden, indem
- auf einen inneren Randbereich einer der Folienbahnen, insbesondere der unteren Folienbahn, nebeneinanderliegend ein Siegelstreifen und ein Klebestreifen aufgebracht, insbesondere aufgesprüht werden, die sich parallel zueinander in Längsrichtung der Folienbahnen erstrecken, und
- die inneren Randbereiche der beiden Folienbahnen anschließend unter Bildung des Überlappungsbereiches aufeinandergelegt und die Folienbahnen im Überlappungsbereich gegeneinander verpresst werden.

Ein Verfahren, welches sich durch die vorgenannten Schritte auszeichnet hat sich als geeignet erwiesen, um eine erfindungsgemäße Verpackungsfolie herzustellen.

In Weiterbildung des erfindungsgemäßen Verfahrens ist vorgesehen, dass die miteinander verbundenen Folienbahnen auf eine Aufwickelrolle aufgewickelt werden, wobei insbesondere zusammen mit den verbundenen Folienbahnen zwei Einlegefolienbahnen aufgewickelt werden, von denen jeweils eine auf einer der Folienbahnen außerhalb des Überlappungsbereiches positioniert wird.

Die erfindungsgemäße Verpackungsfolie kann insbesondere in aufgewickeltem Zustand, also als Verpackunsgfolienrolle in Form von Endlosware an Abnehmer geliefert werden, welche diese einer Verpackungsmaschine zuführen, um Produkte in Schlauchbeuteln oder Folienverpackungen anderer Form aus der Verpackungsfolie einzupacken.

Erfindungsgemäß kann ferner vorgesehen sein, dass zusammen mit der Verpackungsfolie zwei Einlegefolienbahnen zu beiden Seiten von dem Überlappungsbereich auf die Aufwickelrolle aufgewickelt werden. Die Einlegefolienbahnen dienen dem Ausgleich des Dickenunterschiedes, der zwischen dem Überlappungsbereich, in dem die beiden Folienbahnen aufeinanderliegen und dem verbleibenden Bereich der Verpackungsfolie besteht.

Die Einlegefolienbahnen können jeweils eine Breite aufweisen, die der außerhalb des Überlappungsbereiches verbleibenden Breite der Folienbahnen entspricht. Alternativ können die Einlegefolienbahnen, um Material und somit Kosten zu sparen, eine Breite aufweisen, die deutlich geringer ist als die verbleibende Breite der Folienbahnen.

So kann beispielsweise vorgesehen sein, dass die Breite der Einlegefolienbahnen maximal 50 %, insbesondere maximal 30 %, bevorzugt maximal 25 % der außerhalb des Überlappungsbereiches verbleibenden Breite der Folienbahnen aufweist.

Darüber hinaus kann vorgesehen sein, dass jede Einlegefolienbahn zu beiden Seiten des Überlappungsbereiches in geeignetem Abstand zu dem Überlappungsbereich sowie zu den äußeren Randkanten der Verpackungsfolie positioniert ist. Beispielsweise kann jede der beiden Einlegefolienbahnen in einem Abstand von mindestens 2 cm, insbesondere von mindestens 3 cm, bevorzugt von mindestens 5 cm zu der benachbarten äußeren Randkante der Verpackungsfolie positioniert ist.

Eine weitere Ausführungsform des erfindungsgemäßen Verfahrens zeichnet sich dadurch aus, dass vor dem Aufbringen des Siegelstreifens und des Klebestreifens ein sich in Längsrichtung des Folienbahnen erstreckender Dichtstreifen aus einem Siegelmaterial, insbesondere einem Siegellack, auf eine der Folienbahnen derart aufgebracht, bevorzugt aufgedruckt wird, dass sich der Dichtstreifen bis zu der Randkante einer der Folienbahnen erstreckt.

Der Siegelstreifen wird dann zu dieser Randkante benachbart aufgebracht. Der Dichtstreifen ermöglicht, wie vorstehend beschrieben, eine besonders zuverlässige Dichtheit der aus der Verpackungsfolie hergestellten Verpackungen.

In der Zeichnung ist die Erfindung anhand eines Ausführungsbeispiels näher veranschaulicht. Es zeigen:
- Figur 1: eine erfindungsgemäße Verpackungsfolie in schematischer Schnittdarstellung,
- Figur 2: in schematischer Darstellung einen Abschnitt der in Figur 1 dargestellten Verpackungsfolie,
- Figur 3: eine erfindungsgemäße Vorrichtung zur Herstellung einer Verpackungsfolie in schematischer Schnittdarstellung,
- Figur 4: eine Aufsicht der in Figur 3 dargestellten Vorrichtung, und

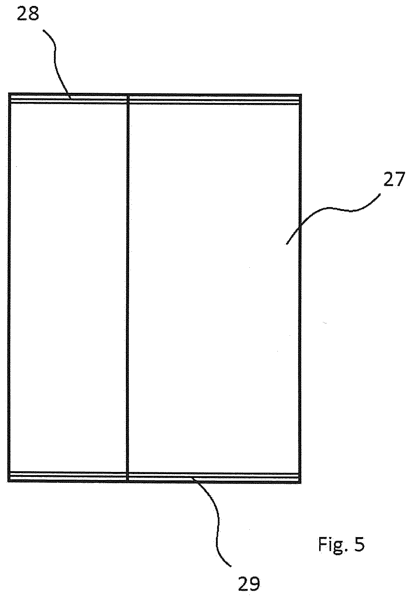

- Figur 5: in schematischer Darstellung eine Aufsicht auf einen Schlauchbeutel, der aus dem in Figur 2 dargestellten Abschnitt der erfindungsgemäßen Verpackungsfolie hergestellt ist.

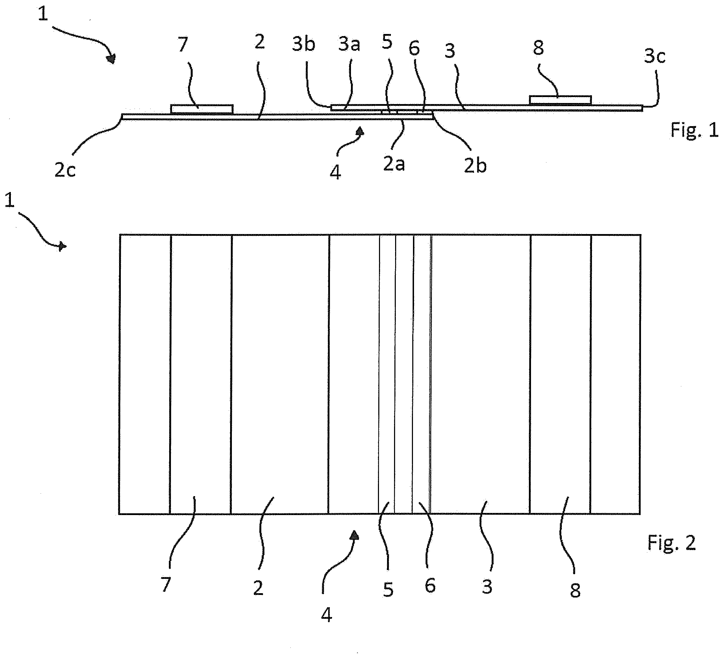

Die Figur 1 zeigt eine schematische Darstellung einer erfindungsgemäßen Verpackungsfolie 1 im Schnitt. Die Verpackungsfolie 1 umfasst zwei Folienbahnen 2, 3. Bei jeder der Folienbahnen 2, 3 handelt es sich um eine Polyolefin-Mehrschichtfolie, welche jeweils eine Breite von 25 cm sowie eine Dicke von etwa 35 µm aufweist. Wie in der Figur 2 gut zu erkennen ist, die eine Aufsicht auf einen Abschnitt der in Figur 1 dargestellten Verpackungsfolie 1 zeigt, erstrecken sich die beiden Folienbahnen 2, 3 parallel zueinander.

Die beiden Folienbahnen 2, 3 sind ferner derart zueinander angeordnet, dass ihre einander zugewandten inneren Randbereiche 2a, 3a unter Bildung eines Überlappungsbereiches 4 aufeinanderliegen. In dem Überlappungsbereich 4, welcher bei dem dargestellten Ausführungsbeispiel eine Breite von 4 cm aufweist, liegt die in der Figur 1 rechte Folienbahn 3 auf der in Figur 1 linken Folienbahn 2. Die beiden Folienbahnen 2, 3 werden daher im Weiteren als obere Folienbahnen 3 und unter Folienbahn 2 bezeichnet. Jede der beiden Folienbahnen 2, 3 weist an einer ihrer Seiten eine Schicht auf einem siegelbaren Material auf, welche sich an der entsprechenden Seite der jeweiligen Folienbahn 2, 3 über deren gesamte Oberfläche erstreckt. Bei dem dargestellten Ausführungsbeispiel sind die beiden Folienbahnen 2, 3 an ihrer in Figur 1 nach unten weisenden Seite, also an ihrer Unterseite mit der Schicht aus einem siegelbaren Material versehen.

Die beiden Folienbahnen 2, 3 sind ferner durch einen Klebestreifen 5 aus einem Hotmelt-Material sowie einen Siegelstreifen 6 aus einem Hotmelt-Material miteinander verbunden. Der Klebestreifen 5 und der Siegelstreifen 6 sind in dem Überlappungsbereich 4 zwischen den beiden Folienbahnen 2, 3 vorgesehen. Der Klebestreifen 5 und der Siegelstreifen 6 erstrecken sich parallel zueinander in Längsrichtung der Folienbahnen 2, 3 und sind, wie in den Figuren gut erkennbar ist, nebeneinanderliegend angeordnet. Der Klebestreifen 5 und der Siegelstreifen 6 weisen jeweils eine Breite von etwa 5 mm sowie eine Dicke von etwa 80 µm auf. Der Klebestreifen 5 und der Siegelstreifen 6 wurden hergestellt, indem ein Hotmelt-Material, und zwar ein Hotmelt-Kleber für den Klebestreifen 5 und ein Hotmelt-Siegelmaterial für den Siegelstreifen 6 durch Aufsprühen auf die untere Folienbahn 2 aufgebracht wurde. Der Siegelstreifen 6 ist peelfähig ausgebildet.

Wie in der Figur 1 gut erkennbar, ist der Klebestreifen 5 zu der Randkante 3b der oberen Folienbahn 3 benachbart. Der Siegelstreifen 6 hingegen ist zu der Randkante 2b der unteren Folienbahn 2 benachbart. Während der Klebestreifen 5 zu der Randkante 3b der oberen Folienbahn 3 einen Abstand von 2 cm aufweist, liegt der Siegelstreifen 6 nahezu unmittelbar an der Randkante 2b der unteren Folienbahn 2. Konkret hat der Siegelstreifen 6 bei der dargestellten Ausführungsform zu der Randkante 2b der unteren Folienbahn 2 einen Abstand von weniger als 0,1 mm.

Alternativ zu dem dargestellten Ausführungsbeispiel kann zusätzlich ein auf die untere oder die obere Folienbahn 2, 3 aufgedruckter Dichtstreifen aus einem Siegelmaterial, beispielsweise Siegellack vorgesehen sein, der sich in Längsrichtung der Folienbahnen 2, 3 und parallel zu dem Siegel- und dem Klebestreifen 6, 5 erstreckt. Ein solcher Dichtstreifen erstreckt sich ferner in Querrichtung der Folienbahnen 2, 3 von der Randkante 2b der unteren Folienbahn 2 bis zumindest zu dem Siegelstreifen 6.

Die in den Figuren 1 und 2 erkennbare erfindungsgemäße Verpackungsfolie 1 wird, was in den Figuren nicht gezeigt ist, auf einer Verpackungsfolienrolle aufgewickelt gelagert. Wird die erfindungsgemäße Folie 1 auf eine Rolle aufgewickelt, so besteht das Problem, dass diese in dem Überlappungsbereich 4 eine Dicke aufweist, welche der Summe der Dicke jeder der beiden Folienbahnen 2, 3 sowie der Dicke der nebeneinanderliegenden Streifen 5, 6 entspricht, während sie außerhalb des Überlappungsbereiches 4, nämlich links und rechts von diesem eine Dicke aufweist, die nur der einer einzelnen Folienbahn 2, 3 entspricht. Beim Aufwickeln nimmt die Dicke der Aufwickelrolle daher in dem Überlappungsbereich 4 erheblich schneller zu als in dem seitlichen Randbereichen. Um diesem Problem zu begegnen, sind auf die in den Figuren nicht dargestellte Verpackungsfolienrolle zusammen mit der erfindungsgemäßen Verpackungsfolie 1 zwei Einlegestreifen 7, 8 mit aufgewickelt, die dem Ausgleich des Dickenunterschiedes zwischen dem Überlappungsbereich 4 und den beiden Bereichen außerhalb rechts und links des Überlappungsbereiches 4 dienen. Die beiden Einlegestreifen 7, 8, die in der schematischen Schnittdarstellung in Figur 1 erkennbar sind, haben jeweils eine Breite von 3 cm, eine Dicke von 115 µm und sind in einem Abstand von 4 cm zu den nach außen weisenden Randkanten 2c, 3c der beiden Folienbahnen 2, 3 vorgesehen. Die Einlegestreifen 7, 8 sind aus geschäumtem Polypropylen gefertigt.

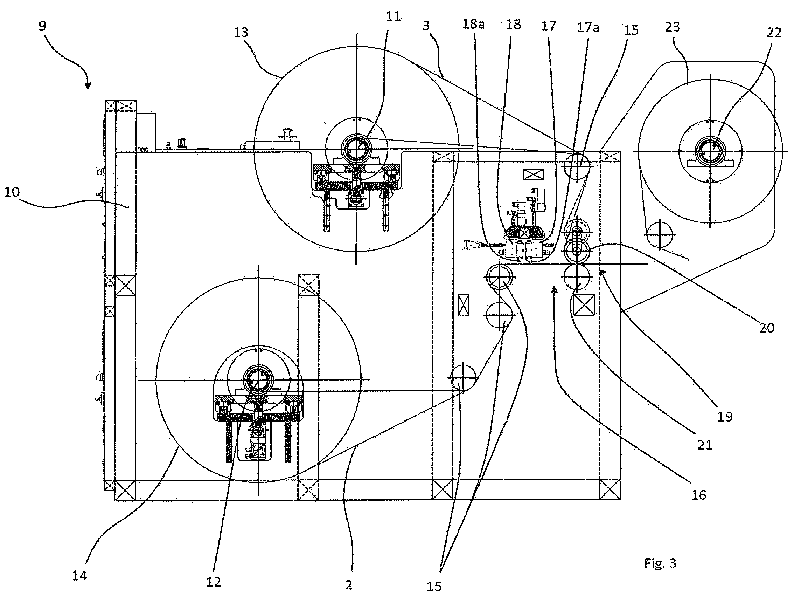

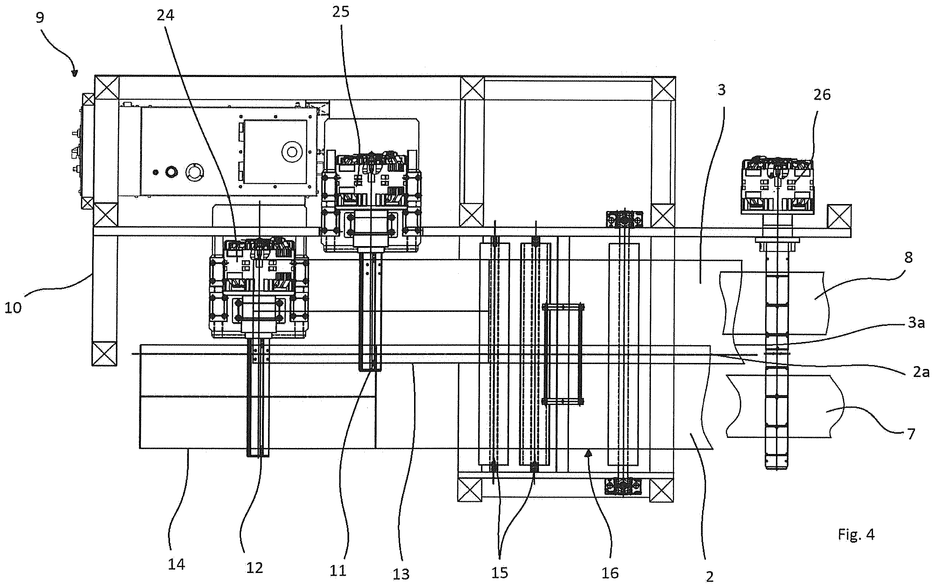

Die in den Figuren 1 und 2 dargestellte erfindungsgemäße Verpackungsfolie 1 wurde mit der in den Figuren 3 und 4 im Schnitt bzw. in der Aufsicht schematisch dargestellten erfindungsgemäßen Vorrichtung 9 zur Herstellung einer Verpackungsfolie gefertigt.

Die erfindungsgemäße Vorrichtung 9 umfasst ein Gestell 10, an dem zwei Abwickelrollen 11, 12 parallel zueinander gehalten sind, was in der Aufsicht in Figur 4 gut zu erkennen ist. An jeder der Abwickelrollen 11, 12 ist jeweils eine Folienvorratsrolle 13, 14 abgewickelbar gehalten, wobei auf jeder Folienvorratsrolle 13, 14 jeweils eine der Folienbahnen 2, 3 einer Breite von 25 cm aufgewickelt ist. Die erfindungsgemäße Vorrichtung 9 umfasst ferner insgesamt vier Führungsrollen 15, wie in der Schnittdarstellung in Figur 3 gut erkennbar ist. Die Führungsrollen 15 sind an dem Gestell 10 gehalten und ausgebildet, um die von den Folienvorratsrollen 13, 14 abgewickelten Folienbahnen 2, 3 durch die Vorrichtung 9 zu führen.

Wie aus den Figuren 3 und 4 hervorgeht, sind die Abwickelrollen 11, 12 und die Führungsrollen 15 derart angeordnet, dass die Folienbahnen 2, 3 parallel zueinander durch die Vorrichtung 9 geführt werden und die Folienbahnen 2, 3 in ihren einander zugewandten inneren Randbereichen 2a, 3a unter Bildung des Überlappungsbereiches 4 aufeinandergelegt werden.

Die Vorrichtung 9 umfasst des Weiteren eine Verbindungseinrichtung 16, die ausgebildet ist, um die beiden Folienbahnen 2, 3 in dem Überlappungsbereich 4 lösbar miteinander zu verbinden. Hierzu weist die Verbindungseinrichtung 16 eine Siegelstation 17, eine Klebestation 18 sowie eine der Siegel-und der Klebestation 17, 18 nachgeordnete Pressstation 19 auf. Die Siegelstation 17 und die Klebestation 18 sind ausgebildet, um auf den inneren Randbereich 2a der unteren Folienbahn 2 nebeneinanderliegend den Siegelstreifen 6 und den Klebestreifen 5 aus einem Hotmelt, also Schmelzkleber aufzubringen. Bei dem dargestellten Ausführungsbeispiel weist die Siegelstation 17 einen Sprühkopf 17a und die Klebestation 18 einen Sprühkopf 18a zum Aufsprühen des Siegel- bzw. Klebematerials auf. Der Sprühkopf 17a der Siegelstation 17 und der Sprühkopf 18a der Klebestation 18 sind in Längsrichtung der Folienbahn 2, 3 und quer zu der Längsrichtung der Folienbahnen 2, 3 versetzt zueinander angeordnet. Die beiden Sprühköpfe 17a, 18a sind ferner in Längsrichtung der Folienbahnen 2, 3 sowie quer zu der Längsrichtung der Folienbahnen 2, 3 bewegbar an dem Gestell 10 der Vorrichtung 9 gehalten, damit die Position des Klebestreifens 5 und des Siegelstreifens 6 auf der unteren Folienbahn 2 präzise einstellbar ist.

Die Pressstation 19 der Verbindungseinrichtung 16 umfasst zwei unter Bildung eines Pressspaltes parallel zueinander angeordnete Pressrollen 20, 21. Die Pressstation 19 ist derart ausgebildet und positioniert, dass die Folienbahnen 2, 3, wie in Figur 3 gut erkennbar, durch den Pressspalt geführt und infolge dessen in dem Überlappungsbereich 4 gegeneinander verpresst werden.

Die beiden Pressrollen 20, 21 der Pressstation 19 sind zur Einstellung der Pressspaltdicke an dem Gestell 10 aufeinander zu und voneinander weg bewegbar gehalten. Hierdurch ist es insbesondere möglich, Folienbahnen 2, 3 unterschiedlicher Dicke zu verarbeiten.

Die Vorrichtung 9 umfasst ferner eine in den Figuren nicht dargestellte, der Verbindungseinrichtung 16 nachgeordnete Aufwickelrolle, die derart angeordnet und ausgebildet ist, dass die beiden Folienbahnen 2, 3 im miteinander verbundenen Zustand, also die hergestellte Verpackungsfolie 1, für den Transport und die Lagerung platzsparend aufgewickelt werden. Bei dem dargestellten Ausführungsbeispiel ist die Aufwickelrolle an einem in der Figur nicht dargestellten weiteren Gestell gehalten, welches unmittelbar hinter dem Gestell 10 positioniert ist.

Zwischen der in den Figuren nicht dargestellten Aufwickelrolle und der Verbindungseinrichtung 16 ist eine weitere Abwickelrolle 22 zur Aufnahme einer Einlegefolienvorratsrolle 23 vorgesehen, auf welcher axial beabstandet die zwei Einlegefolienbahnen 7, 8 aufgerollt sind. Die weitere Abwickelrolle 22 ist derart angeordnet, dass die Einlegefolienbahnen 7, 8 zusammen mit den verbundenen Folienbahnen 2, 3, also zusammen mit der erfindungsgemäßen Verpackungsfolie 1 auf die nicht dargestellte Aufwickelrolle aufgewickelt werden. Das Aufwickeln der Einlegefolienbahnen 7, 8 zusammen mit der erfindungsgemäßen Verpackungsfolie 1 erfolgt dabei derart, dass auf jeder Folienbahn 2, 3 außerhalb des Überlappungsbereiches 4, wie in Figur 1 gut erkennbar, eine Einlegefolienbahn 7, 8 aufliegt. Die Abwickelrolle 22 ist genau wie die Aufwickelrolle an dem in der Figur nicht erkennbaren weiteren Gestell gehalten.

Es sind in den Figuren nicht dargestellte Führungsmittel vorgesehen, mit welchen die beiden Folienbahnen 2, 3 sowie die Einlegefolienbahnen 7, 8 außenseitig geführt werden.

Darüber hinaus ist vorgesehen, dass die Abwickelrollen 11, 12, die Führungsrollen 15, die Aufwickelrolle sowie die weitere Aufwickelrolle 22 seitlich positionierbar an dem Gestell 10 der Vorrichtung 9 gehalten sind. Hierdurch kann insbesondere die Position der Folienbahnen 2, 3 zueinander und somit die Breite des Überlappungsbereiches sowie die Position der Einlegefolienbahnen 7, 8 relativ zu dem hergestellten Verpackungsfolie 1 eingestellt werden.

Schließlich umfasst die Vorrichtung 9 eine Fördereinrichtung, die ausgebildet ist, um die Folienbahnen 2, 3 durch die Vorrichtung 9 zu fördern. Die Fördereinrichtung weist konkret zwei Antriebselemente 24, 25 auf, von denen jeweils eines den Abwickelrollen 11, 12 zugeordnet und ausgebildet ist, um diese in eine vorgegebene Drehrichtung anzutreiben. In gleicher Weise ist der Abwickelrolle 22 für die Einlegefolievorratsrolle 23 eine weitere Antriebseinheit 26 der Fördereinrichtung zugeordnet, über welche die beiden Einlegefolienbahnen 7, 8 von der Einlegefolienvorratsrolle 23 abwickelbar sind.

Im Betrieb der Vorrichtung 9 werden zur Herstellung der in den Figuren 1 und 2 erkennbaren erfindungsgemäßen Verpackungsfolie 1 von den beiden Abwickelrollen 11, 12 die beiden Folienbahnen 2, 3 abgewickelt. Die Folienbahnen 2, 3 werden mittels der Führungsrollen 15 derart parallel durch die Vorrichtung 9 geführt, dass sie in ihrem einander zugewandten inneren Randbereichen 2a, 3a unter Bildung des Überlappungsbereiches 4 aufeinanderlegbar sind.

Die beiden Folienbahnen 2, 3 werden in dem Überlappungsbereich 4 miteinander verbunden. Hierzu wird zunächst auf den inneren Randbereich 2a der unteren Folienbahn 2 nebeneinanderliegend ein Siegel und ein Klebematerial aufgebracht. Konkret wird mittels des Sprühkopfes 17a der Siegeleinrichtung 17 ein Siegelmaterial auf die untere Folienbahn 2 aufgesprüht und gleichzeitig mit dem Sprühkopf 18a der Klebestation 18 seitlich beabstandet hierzu an Klebematerial auf die untere Folienbahn 2 aufgesprüht. Das Siegel- und das Klebematerial werden auf die untere Folienbahn 2 aufgesprüht, während diese an der Siegel- und der Klebestation 17, 18 vorbeigefördert wird. Die Folienbahn 2 kann dabei mit hoher Geschwindigkeit gefördert werden, während das Siegel- und das Klebematerial zur Herstellung des Siegel- und des Klebestreifens 6, 5 aufgesprüht wird. Bei dem dargestellten Ausführungsbeispiel wird die Folienbahn 2 mit einer Geschwindigkeit von 150 Metern pro Minute an den Sprühköpfen 17a, 18a vorbeigefördert.

Nach dem Aufbringen des Siegel- und des Klebematerials werden die inneren Randbereiche 2a, 3a der beiden Folienbahnen 2, 3 unter Bildung des Überlappungsbereiches 4 aufeinandergelegt, wie insbesondere in der Schnittdarstellung in Figur 3 zu erkennen ist. Konkret werden die beiden Folienbahnen 2, 3 im Bereich des Pressspaltes aufeinandergelegt, welcher zwischen den beiden Pressrollen 20, 21 der Pressstation 19 gebildet wird. Die obere Folienbahn 3 wird hierzu über die obere Pressrolle 20 in dem Pressspalt auf die untere Folienbahn 2 gelegt. Die beiden Folienbahnen 2, 3 werden mittels der beiden Pressrollen 20, 21 im Überlappungsbereich 4 verpresst.

Im Ergebnis wird die in den Figuren 1 und 2 erkennbare erfindungsgemäße Verpackungsfolie 1 erhalten, welche zwei Folienbahnen 2, 3 umfasst, die unter Bildung eines Überlappungsbereiches 4 teilweise aufeinanderliegen und in dem Überlappungsbereich 4 mit einem Klebestreifen 5 und einem Siegelstreifen 6 miteinander verbunden sind.

Soll alternativ zu dem dargestellten Ausführungsbeispiel zusätzlich zu dem Siegelstreifen ein Dichtstreifen in dem Überlappungsbereich 4 vorgesehen werden, der sich bis zu der Randkante 2b erstreckt, so wird dieser auf die obere oder untere Folienbahn 2, 3 aufgedruckt, bevor der Siegel- und der Klebestreifen 6, 5 auf die zuvor beschriebene Weise hergestellt werden. Erstreckt sich der Dichtstreifen beispielsweise über die gesamte Breite des Überlappungsbereiches 4 und wird dieser auf diejenige Folienbahn 2, 3 aufgedruckt, auf welche auch der Siegel- und der Folienstreifen 6, 5 aufgesprüht werden, so werden der Siegel- und der Klebestreifen 6, 5 auf den Dichtstreifen aufgesprüht

Die auf die vorgenannte Weise hergestellte erfindungsgemäße Verpackungsfolie 1 wird abschließend mittels der in den Figuren 3 und 4 nicht dargestellten Aufwickelrolle aufgewickelt. Zusammen mit der erfindungsgemäßen Verpackungsfolie 1 werden die beiden Einlegefolienstreifen 7, 8, wie in der Figur 1 erkennbar, aufgewickelt. Die erhaltene Verpackungsfolienrolle kann platzsparend gelagert und kostengünstig weiter transportiert werden.

Zur Herstellung einer Verpackung, beispielsweise eines Schlauchbeutels für ein Produkt aus dem Lebensmittelbereich, konkret ein Stück Käse, wird mit einer in den Figuren nicht dargestellten Verpackungsmaschine in an sich bekannter Weise die auf die vorgenannte Weise hergestellte erfindungsgemäße Verpackungsfolie 1 von der Verpackungsfolienrolle abgewickelt. Es wird jeweils ein Stück Käse auf einen Abschnitt der Verpackungsfolie 1 entsprechender Größe gelegt, wobei darauf geachtet wird, dass der Überlappungsbereich 4 der erfindungsgemäßen Verpackungsfolie 1 im Bereich der späteren Oberseite der herzustellenden Verpackung liegt und dass die Schicht aus siegelbaren Material der beiden Folienstreifen 2, 3 der Verpackungsfolie 1, also die Unterseite der beiden Folienstreifen 2, 3 dem Stück Käse zugewandt ist. Diese Seiten bilden folglich die Innenseite der herzustellenden Verpackung. Die Verpackungsfolie 1 wird um den Käse herumgefaltet und es werden entlang zweier Quernähte sowie einer Längsnaht, entlang derer die beiden freien Randbereiche der Verpackungsfolie 1 miteinander verbunden werden, durch Aufbringen von Druck und Erhitzen Siegelnähte in an sich bekannter Weise hergestellt, um eine umseitig verschlossene Schlauchbeutel-Verpackung für das Stück Käse zu erhalten. Eine entsprechende Schlauchbeutel-Verpackung 27 mit zwei Quernähten 28, 29 ist in der Figur 6 dargestellt. Die Längsnaht, welche in dieser Figur nicht zu erkennen ist, befindet sich auf der Rückseite der Schlauchbeutel-Verpackung 27.

Die Verpackung 27 kann von einem Benutzer zur Entnahme des Stücks Käse komfortabel geöffnet werden, indem der als Grifflasche dienende freie Abschnitt des Randbereiches 3a der oberen Folienbahn 3 gegriffen und die obere Folienbahn 3 in dem Überlappungsbereich 4 von der unteren Folienbahn 2 abgezogen wird. Infolgedessen wird die obere Folienbahn von dem Klebestreifen 5 abgehoben und der Siegelstreifen 6 wird durchbrochen. Der Benutzer kann das Stück Käse entnehmen, sich einen Teil hiervon abschneiden und anschließend das Stück Käse durch die hergestellte Öffnung zurück in die Verpackung 27 legen. Abschließend drückt er in dem Überlappungsbereich 4 die beiden Folienbahnen 2, 3 wieder aufeinander. Hierdurch wird die obere Folienbahn 3 mit dem Klebestreifen 5 in Kontakt gebracht und die Verpackung 27 so zuverlässig wieder verschlossen.

## Patentansprüche

1. Verpackungsfolie (1), insbesondere zur Herstellung von Schlauchbeuteln (27), umfassend zwei ein- oder mehrschichtige Folienbahnen (2, 3), die parallel zueinander ausgerichtet und derart angeordnet sind, dass ihre einander zugewandten inneren Randbereiche (2a, 3a) unter Bildung eines Überlappungsbereiches (4) aufeinander liegen, wobei die beiden Folienbahnen (2, 3) in dem Überlappungsbereich (4) lösbar miteinander verbunden sind, wobei die beiden Folienbahnen (2, 3) durch einen Klebestreifen (5) aus einem Hotmelt und einen Siegelstreifen (6) miteinander verbunden sind, die sich in dem Überlappungsbereich (4) parallel zueinander in einer Längsrichtung der Folienbahnen (2, 3) erstrecken und nebeneinanderliegend angeordnet sind.

2. Verpackungsfolie nach Anspruch 1, **dadurch gekennzeichnet, dass** der Siegelstreifen (6) von einer benachbarten Randkante (2b) einer Folienbahn (2) einen Abstand von maximal 2 mm, insbesondere von maximal 1 mm, bevorzugt von maximal 0,5 mm und besonders bevorzugt von maximal 0,2 mm aufweist und/oder dass der Klebestreifen (5) von einer benachbarten Randkante (3b) einer Folienbahn (3) einen Abstand von 1 cm bis 4 cm, insbesondere von 1,5 cm bis 3 cm, bevorzugt von 1,8 cm bis 2,2 cm aufweist.

3. Verpackungsfolie nach Anspruch 1 oder 2, **dadurch gekennzeichnet, dass** in dem Überlappungsbereich (4) zwischen den Folienbahnen (2, 3) ein sich parallel zu dem Siegelstreifen (6) erstreckender Dichtstreifen aus einem Siegelmaterial, insbesondere einem Siegellack vorgesehen ist, der sich bis zu der dem Siegelstreifen (6) benachbarten Randkante (2b) erstreckt, wobei der Dichtstreifen insbesondere durch Aufdrucken auf eine der Folienbahnen (2, 3) hergestellt ist.

4. Verpackungsfolie nach einem der vorhergehenden Ansprüche, **dadurch gekennzeichnet, dass** der Siegelstreifen (6) und/oder der Klebestreifen (5) eine Dicke von 20 µm bis 100 µm, insbesondere von 40 µm bis 90 µm, bevorzugt von 75 µm bis 85 µm aufweist und/oder dass der Siegelstreifen (6) und/oder der Klebestreifen (5) eine Breite von 3 mm bis 10 mm, insbesondere von 4 mm bis 7 mm, bevorzugt von 4,5 mm bis 5,5 mm aufweist und/oder dass der Überlappungsbereich (4) eine Breite von 3 cm bis 7 cm, insbesondere von 3,5 cm bis 6 cm, bevorzugt von 4 cm bis 5 cm aufweist.

5. Verpackungsfolie nach einem der vorhergehenden Ansprüche, **dadurch gekennzeichnet, dass** es sich bei dem Siegelstreifen (6) um einen insbesondere durch Aufsprühen hergestellten Hotmelt-Streifen handelt und/oder der Siegelstreifen (6) peelfähig ausgebildet ist und/oder dass es sich bei dem Klebestreifen (5) um einen durch Aufsprühen hergestellten Klebestreifen (5) handelt.

6. Vorrichtung (9) zur Herstellung einer Verpackungsfolie (1), umfassend
- ein Gestell (10),
- zwei an dem Gestell (10) parallel zueinander gehaltene Abwickelrollen (11, 12), an denen jeweils eine Folienvorratsrolle (13, 14) mit einer ein- oder mehrschichtige Folienbahn (2, 3) abwickelbar gehalten werden kann,
- mehrere an dem Gestell (10) gehaltene Führungsrollen (15), die ausgebildet sind, um die von den Folienvorratsrollen (13, 14) abgewickelten Folienbahnen (2, 3) durch die Vorrichtung (9) zu führen, wobei die Abwickelrollen (11, 12) und die Führungsrollen (15) derart angeordnet sind, dass die Folienbahnen (2, 3) parallel zueinander durch die Vorrichtung (9) geführt werden und die Folienbahnen (2, 3) in ihren einander zugewandten inneren Randbereichen (2a, 3a) unter Bildung eines Überlappungsbereiches (4) aufeinander gelegt werden,
- eine Verbindungseinrichtung (16), die ausgebildet ist, um die beiden Folienbahnen (2, 3) in dem Überlappungsbereich (4) lösbar miteinander zu verbinden,
- eine Fördereinrichtung, um die Folienbahnen (2, 3) durch die Vorrichtung (9) zu fördern, die insbesondere den Abwickelrollen (11, 12) und/oder den Führungsrollen (15) zugeordnete Antriebseinheiten (24, 25) umfassen, durch welche die Rollen in eine vorgegebene Drehrichtung angetrieben werden,
**dadurch gekennzeichnet, dass** die Verbindungseinrichtung (16) umfasst
- eine Siegel- und eine Klebestation (17, 18), die ausgebildet sind, um auf den inneren Randbereich (2a) einer der Folienbahnen (2, 3), insbesondere der unteren Folienbahn (2), nebeneinanderliegend einen Klebestreifen (5) aus einem Hotmelt und einen Siegelstreifen (6) aufzubringen, insbesondere aufzusprühen, die sich parallel zueinander in Längsrichtung der Folienbahnen (2, 3) erstrecken, und
- eine der Siegel- und der Klebestation (17, 18) nachgeordnete Pressstation (19) mit zwei unter Bildung eines Pressspaltes parallel zueinander angeordnete Pressrollen (20, 21), wobei die Pressstation (19) derart ausgebildet und positioniert ist, dass die Folienbahnen (2, 3) durch den Pressspalt geführt und so in dem Überlappungsbereich (4) gegeneinander verpresst werden.

7. Vorrichtung nach Anspruch 6, **dadurch gekennzeichnet, dass** eine der Verbindungseinrichtung (16) nachgeordnete Aufwickelrolle vorgesehen ist, die derart angeordnet und ausgebildet ist, dass die beiden Folienbahnen (2, 3) im miteinander verbundenen Zustand auf die Aufwickelrolle aufgewickelt werden.

8. Vorrichtung nach Anspruch 7, **dadurch gekennzeichnet, dass** eine weitere Abwickelrolle (23) zur Aufnahme einer Einlegefolienvorratsrolle (23) vorgesehen ist, auf welcher axial beabstandet zwei Einlegefolienbahnen (7, 8) aus einer ein- oder mehrschichtigen Folie aufgerollt sind, wobei die weitere Abwickelrolle (23) derart angeordnet ist, dass die Einlegefolienbahnen (7, 8) zusammen mit den verbundenen Folienbahnen (2, 3) auf die Aufwickelrolle aufgewickelt werden und zwar derart, dass auf jeder Folienbahn (2, 3) außerhalb des Überlappungsbereichs (4) eine Einlegefolienbahn (7, 8) aufliegt.

9. Vorrichtung nach einem der Ansprüche 6 bis 8, **dadurch gekennzeichnet, dass** Führungsmittel vorgesehen sind, um die Folienbahnen (2, 3) und/oder die Einlegefolienbahnen (7, 8) insbesondere außenseitig zu führen und/oder dass die beiden Pressrollen (20, 21) zur Einstellung einer Pressspaltdicke an dem Gestell (10) aufeinander zu und voneinander weg bewegbar gehalten sind.

10. Vorrichtung nach einem der Ansprüche 6 bis 9, **dadurch gekennzeichnet, dass** die Abwickelrollen (11, 12) und/oder die Führungsrollen (15) und/oder die Aufwickelrolle und/oder die weitere Abwickelrolle (22) seitlich positionierbar an dem Gestell (10) gehalten sind.

11. Vorrichtung nach einem der Ansprüche 6 bis 10, **dadurch gekennzeichnet, dass** die Siegel- und die Klebestation (17, 18) in einer Längsrichtung der Folienbahnen (2, 3) und/oder quer zu einer Längsrichtung der Folienbahnen (2, 3) versetzt zueinander angeordnet sind und insbesondere die Siegel- und die Klebestation (17, 18) in einer Längsrichtung der Folienbahnen (2, 3) und/oder quer zu einer Längsrichtung der Folienbahnen (2, 3) bewegbar gehalten sind, wobei bevorzugt die Siegel- und die Klebestation (17, 18) jeweils einen Sprühkopf (17a, 18a) zum Aufsprühen des Siegel- bzw. Klebematerials aufweisen und die beiden Sprühköpfe (17a, 18a) in einer Längsrichtung der Folienbahnen (2, 3) und/oder quer zu einer Längsrichtung der Folienbahnen (2, 3) bewegbar gehalten sind.

12. Vorrichtung nach einem der Ansprüche 6 bis 11, **dadurch gekennzeichnet, dass** eine der Verbindungseinrichtung (16) vorgeschaltete Druckeinrichtung vorgesehen ist, die ausgebildet und angeordnet ist, um einen sich in Längsrichtung der Folienbahnen (2, 3) erstreckenden Dichtstreifen aus einem Siegelmaterial, insbesondere einem Siegellack, auf eine der Folienbahnen (2, 3) aufzudrucken, der sich bis zu einer Randkante (2b) der Folienbahnen (2, 3) erstreckt und/oder eine der Verbindungseinrichtung (16) vorgeschaltete Aufrauhungseinrichtung vorgesehen ist, die ausgebildet und angeordnet ist, um wenigstens eine der Folienbahnen (2, 3) in dem Überlappungsbereich (4) zur Erhöhung der Oberflächenspannung aufzurauhen .

13. Verfahren zur Herstellung einer Verpackungsfolie (1), umfassend die Schritte
- zwei ein- oder mehrschichtige Folienbahnen (2, 3) werden auf zwei parallel zueinander angeordneten Folienvorratsrollen (13, 14) bereitgestellt,
- die Folienbahnen (2, 3) werden abgewickelt und mittels Führungsrollen (15) derart geführt, dass sie in ihren einander zugewandten inneren Randbereichen (2a, 3a) unter Bildung eines Überlappungsbereiches (4) aufeinandergelegt werden,
- die beiden Folienbahnen (2, 3) werden in dem Überlappungsbereich (4) miteinander verbunden,
**dadurch gekennzeichnet, dass** die beiden Folienbahnen (2, 3) in dem Überlappungsbereich (4) miteinander verbunden werden, indem
- auf einen inneren Randbereich (2a) einer der Folienbahnen (2, 3), insbesondere der unteren Folienbahn (2), nebeneinanderliegend ein Siegelstreifen (6) und ein Klebestreifen (5) aufgebracht, insbesondere aufgesprüht werden, die sich parallel zueinander in Längsrichtung der Folienbahnen (2, 3) erstrecken, und
- die inneren Randbereiche (2a, 3a) der beiden Folienbahnen (2, 3) anschließend unter Bildung des Überlappungsbereiches (4) aufeinandergelegt und die Folienbahnen (2, 3) im Überlappungsbereich (4) gegeneinander verpresst werden.

14. Verfahren nach Anspruch 13, **dadurch gekennzeichnet, dass** die miteinander verbundenen Folienbahnen (2, 3) auf eine Aufwickelrolle aufgewickelt werden, wobei insbesondere zusammen mit den verbundenen Folienbahnen (2, 3) zwei Einlegefolienbahnen (7, 8) aufgewickelt werden, von denen jeweils eine außerhalb des Überlappungsbereiches (4) auf einer der Folienbahnen (2, 3) positioniert wird.

15. Verfahren nach Anspruch 13 oder 14, **dadurch gekennzeichnet, dass** vor dem Aufbringen des Siegelstreifens (6) und des Klebestreifens (5) ein sich in Längsrichtung des Folienbahnen (2, 3) erstreckender Dichtstreifen aus einem Siegelmaterial, insbesondere einem Siegellack, auf eine der Folienbahnen (2, 3) derart aufgebracht, bevorzugt aufgedruckt wird, dass sich der Dichtstreifen bis zu der Randkante (2b) einer der Folienbahnen (2, 3) erstreckt und der Siegelstreifen (6) zu dieser Randkante (2b) benachbart aufgebracht wird.

## Claims

1. A packaging film (1), in particular for the production of tubular bags (27), comprising two single- or multi-layered film strips (2, 3) which are aligned parallel to one another and are arranged such that their inner edge regions (2a, 3a) facing one another lie one over the other such as to form an overlap region (4), the two film strips (2, 3) being detachably connected to one another in the overlap region (4), the two film strips (2, 3) being connected to one another by an adhesive strip (5) made of a hotmelt and a sealing strip (6) which extend parallel to one another in a longitudinal direction of the film strips (2, 3) in the overlap region (4) and are arranged lying next to one another.

2. The packaging film according to Claim 1, **characterised in that** the sealing strip (6) is spaced apart from an adjacent outer edge (2b) of a film strip (2) by a maximum of 2 mm, in particular a maximum of 1 mm, preferably a maximum of 0.5 mm and particularly preferably a maximum of 0.2 mm, and/or that the adhesive strip (5) is spaced apart from an adjacent outer edge (3b) of a film strip (3) by 1 cm to 4 cm, in particular 1.5 cm to 3 cm, preferably 1.8 cm to 2.2 cm.

3. The packaging film according to Claim 1 or 2, **characterised in that** in the overlap region (4) between the film strips (2, 3) a sealing band made of a sealing material, in particular a sealing lacquer, extending parallel to the sealing strip (6) is provided which extends to the outer edge (2b) adjacent to the sealing strip (6), the sealing band being produced in particular by printing onto one of the film strips (2, 3).

4. The packaging film according to any of the preceding claims, **characterised in that** the sealing strip (6) and/or the adhesive strip (5) has a thickness of 20 µm to 100 µm, in particular of 40 µm to 90 µm, preferably of 75 µm to 85 µm, and/or that the sealing strip (6) and/or the adhesive strip (5) has a width of 3 mm to 10 mm, in particular of 4 mm to 7 mm, preferably of 4.5 mm to 5.5 mm and/or that the overlap region (4) has a width of 3 cm to 7 cm, in particular of 3.5 cm to 6 cm, preferably of 4 cm to 5 cm.

5. The packaging film according to any of the preceding claims, **characterised in that** the sealing strip (6) is a hotmelt strip produced in particular by spraying on and/or the sealing strip (6) is made to be peelable and/or that the adhesive strip (5) is an adhesive strip (5) produced by spraying on.

6. A device (9) for producing a packaging film (1), comprising
- a stand (10),
- two unwinding rollers (11, 12) held parallel to one another on the stand (10) on which a supply roll of film (13, 14) with a single- or multi-layered film strip (2, 3) can respectively be held so as to be able to be unwound,
- a number of guide rollers (15) held on the stand (10) and which are formed to guide the film strips (2, 3) unwound from the supply rolls of film (13, 14) through the device (9), the unwinding rollers (11, 12) and the guide rollers (15) being arranged such that the film strips (2, 3) are guided parallel to one another through the device (9) and the film strips (2, 3) are laid one over the other in their inner edge regions (2a, 3a) facing one another such as to form an overlap region (4),
- a connection device (16) that is formed to connect the two film strips (2, 3) detachably to one another in the overlap region (4),
- a conveying device for conveying the film strips (2, 3) through the device (9) which in particular comprise drive units (24, 25) assigned to the unwinding rollers (11, 12) and/or the guide rollers (15), by means of which the rollers are driven in a predetermined rotational direction,
**characterised in that** the connection device (16) comprises
- a sealing and an adhering station (17, 18) which are formed to apply, in particular to spray on, to the inner edge region (2a) of one of the film strips (2, 3), in particular the lower film strip (2), an adhesive strip (5) made of a hotmelt and a sealing strip (6), lying alongside one another, which strips extend parallel to one another in the longitudinal direction of the film strips (2, 3), and
- a pressing station (19) downstream of the sealing and the adhering station (17, 18) with two pressing rollers (20, 21) arranged parallel to one another so as to form a pressing gap, the pressing station (19) being formed and positioned such that the film strips (2, 3) are guided through the pressing gap and so are pressed against one another in the overlap region (4).

7. The device according to Claim 6, **characterised in that** a winding up roller is provided downstream of the connection device (16), which roller is arranged and formed such that the two film strips (2, 3) in the state connected to one another are wound up onto the winding up roller.

8. The device according to Claim 7, **characterised in that** a further unwinding roller (23) is provided for receiving an insertion film supply roll (23) onto which two insertion film strips (7, 8) of a single or multi-layered film, spaced apart from one another axially, are rolled up, the further unwinding roller (23) being arranged such that the insertion film strips (7, 8) are wound up onto the winding up roller with the connected film strips (2, 3) such that an insertion film strip (7, 8) lies over each film strip (2, 3) outside of the overlap region (4).

9. The device according to any of Claims 6 to 8, **characterised in that** guide means are provided for guiding the film strips (2, 3) and/or the insertion film strips (7,8) in particular on the outside and/or that the two pressing rollers (20, 21) are held such as to be able to be moved towards and away from one another in order to set a pressing gap thickness on the stand (10).

10. The device according to any of Claims 6 to 9, **characterised in that** the unwinding rollers (11, 12) and/or the guide rollers (15) and/or the winding up roller and/or the further unwinding roller (22) are held on the stand (10) such as to be able to be positioned laterally.

11. The device according to any of Claims 6 to 10, **characterised in that** the sealing and the adhering station (17, 18) are arranged offset to one another in a longitudinal direction of the film strips (2, 3) and/or transversely to a longitudinal direction of the film strips (2, 3), and in particular the sealing and the adhering station (17, 18) are held moveably in a longitudinal direction of the film strips (2, 3) and/or transversely to a longitudinal direction of the film strips (2, 3), the sealing and the adhering station (17, 18) preferably each having a spray head (17a, 18a) for spraying on the sealing or adhering material, and the two spray heads (17a, 18a) being held moveably in a longitudinal direction of the film strips (2, 3) and/or transversely to a longitudinal direction of the film strips (2, 3).

12. The device according to any of Claims 6 to 11, **characterised in that** a printing device is provided upstream of the connection device (16), which printing device is formed and arranged to print a sealing band made of a sealing material, in particular a sealing lacquer, extending in the longitudinal direction of the film strips (2, 3) onto one of the film strips (2, 3), which sealing band extends to an outside edge (2b) of the film strips (2, 3) and/or a roughening device is provided upstream of the connection device (16), which roughening device is formed and arranged to roughen at least one of the film strips (2, 3) in the overlap region (4) in order to increase the surface tension.

13. A method for producing a packaging film (1) comprising the steps
- two single- or multi-layered film strips (2, 3) are provided on two film supply rolls (13, 14) arranged parallel to one another,
- the film strips (2, 3) are unwound and guided by means of guide rollers (15) such that they are laid one on top of the other in their inner edge regions (2a, 3a) facing one another such as to form an overlap region (4),
- the two film strips (2, 3) are connected to one another in the overlap region (4),
**characterised in that** the two film strips (2, 3) are connected to one another in the overlap region (4), by
- a sealing strip (6) and an adhesive strip (5) being applied, in particular sprayed on, to an inner edge region (2a) of one of the film strips (2, 3), in particular the lower film strip (2), lying next to one another, which strips extend parallel to one another in the longitudinal direction of the film strips (2, 3), and
- the inner edge regions (2a, 3a) of the two film strips (2, 3) then being laid one on top of the other to form the overlap region (4), and the film strips (2, 3) being pressed against one another in the overlap region (4).

14. The method according to Claim 13, **characterised in that** the film strips (2, 3) connected to one another are wound up onto a winding up roller, in particular two insertion film strips (7, 8) being wound up together with the connected film strips (2, 3), one of which is respectively positioned on one of the film strips (2, 3) outside of the overlap region (4).

15. The method according to Claim 13 or 14, **characterised in that** before applying the sealing strip (6) and the adhesive strip (5) a sealing band made of a sealing material, in particular a sealing lacquer, and extending in the longitudinal direction of the film strips (2, 3) is applied, preferably printed on, to one of the film strips (2, 3) such that the sealing band extends to the outside edge (2b) of one of the film strips (2, 3), and the sealing strip (6) is applied adjacent to this outside edge (2b).

## Revendications

1. Film d'emballage (1), destiné en particulier à la fabrication de sachets tubulaires (27), comprenant deux bandes de film monocouche ou multicouche (2, 3), orientées parallèlement entre elles et agencées de sorte que leurs zones périphériques intérieures tournées l'une vers l'autre (2a, 3a) se superposent en formant une zone de chevauchement (4), dans lequel les deux bandes de film (2, 3) dans la zone de chevauchement (4) sont reliées entre elles de manière séparable, dans lequel les deux bandes de film (2, 3) sont reliées par une bande adhésive (5) réalisée à partir d'une colle thermofusible et d'une bande de scellement (6), s'étendant parallèlement l'une par rapport à l'autre dans la zone de chevauchement (4) dans un sens longitudinal des bandes de film (2, 3) et disposées en juxtaposition.

2. Film d'emballage selon la revendication 1, **caractérisé en ce que** la bande de scellement (6) présente par rapport à une bordure voisine (2b) d'une bande de film (2) une distance de 2 mm maximum, en particulier de 1 mm maximum, de préférence de 0,5 mm maximum et de manière particulièrement préférable de 0,2 mm maximum et/ou **en ce que** la bande adhésive (5) présente par rapport à une bordure voisine (3b) d'une bande de film (3) une distance de 1 à 4 cm, en particulier de 1,5 à 3 cm et de préférence de 1,8 à 2,2 cm.

3. Film d'emballage selon la revendication 1 ou 2, **caractérisé en ce que**, dans la zone de chevauchement (4) entre les bandes de film (2, 3), il est prévu une bande d'étanchéité s'étendant parallèlement à la bande de scellement (6) réalisée dans une matière de scellement, en particulier un vernis de scellement, qui s'étend jusqu'à la bordure voisine (2b) de la bande de scellement (6), sachant que la bande d'étanchéité est en particulier réalisée par impression sur l'une des bandes de film.

4. Film d'emballage selon l'une quelconque des revendications mentionnées précédemment, **caractérisé en ce que** la bande de scellement (6) et/ou la bande adhésive (5) présente une épaisseur de 20 à 100 µm, en particulier de 40 à 90 µm et de préférence de 75 à 85 µm et/ou **en ce que** la bande de scellement (6) et/ou la bande adhésive (5) présente une largeur de 3 à 10 mm, en particulier de 4 à 7 mm et de préférence de 4,5 à 5,5 mm et/ou **en ce que** la zone de chevauchement (4) présente une largeur de 3 à 7 cm, en particulier de 3,5 à 6 cm et de préférence de 4 à 5 cm.

5. Film d'emballage selon l'une quelconque des revendications mentionnées précédemment, **caractérisé en ce que** la bande de scellement (6) est constituée d'une bande de colle thermofusible appliquée en particulier par pulvérisation et/ou que la bande de scellement (6) est pelable et/ou **en ce que** la bande adhésive (5) est une bande adhésive réalisée par pulvérisation (5).

6. Dispositif (9) de fabrication d'un film d'emballage (1), comprenant
- un bâti (10),
- deux rouleaux dérouleurs (11, 12) placés en parallèle l'un par rapport à l'autre sur le bâti (10), sur lesquels un rouleau de film de réserve (13, 14) avec une bande de film monocouche ou multicouche (2, 3) peut être placé de manière déroulable,
- plusieurs rouleaux de guidage (15) placés sur le bâti (10), conçus pour guider les bandes de film (2, 3) déroulées des rouleaux de réserve de film (13, 14) par le dispositif (9), dans lequel les rouleaux dérouleurs (11, 12) et les rouleaux de guidage (15) sont agencés de sorte que les bandes de film (2, 3) soient guidées en parallèle l'une par rapport à l'autre par le dispositif (9) et que les bandes de film (2, 3) soient, dans leurs zones périphériques intérieures (2a, 3a) tournées l'une vers l'autre, superposées en formant une zone de chevauchement (4),
- un dispositif de liaison (16), conçu de façon à relier les deux bandes de film (2, 3) de manière séparable dans la zone de chevauchement (4),
- un système de transport pour transporter les bandes de film (2, 3) au travers du dispositif (9), comprenant en particulier des unités d'entraînement (24, 25) affectée aux rouleaux dérouleurs (11, 12) et/ou aux rouleaux de guidage (15), assurant l'entraînement des rouleaux dans un sens de rotation défini,
**caractérisé en ce que** le dispositif de liaison (16) comprend
- une station de scellement et une station de collage (17, 18), conçues pour appliquer en juxtaposition, en particulier par pulvérisation, sur la zone périphérique intérieure (2a) de l'une des bandes de film (2, 3), en particulier la bande de film inférieure (2), une bande adhésive (5) réalisée à partir d'une colle thermofusible et d'une bande de scellement (6), s'étendant parallèlement l'une par rapport à l'autre dans le sens longitudinal des bandes de film (2, 3) et
- une station de pressage (19) agencée en aval des stations de scellement et de collage (17, 18) avec deux rouleaux de pressage (20, 21) agencés parallèlement l'un par rapport à l'autre en formant une fente de pressage, dans lequel la station de pressage (19) est conçue et positionnée de sorte que les bandes de film (2, 3) soient guidées par la fente de pressage et ainsi comprimées l'une contre l'autre dans la zone de chevauchement (4).

7. Dispositif selon la revendication 6, **caractérisé en ce qu'**il est prévu en aval du dispositif de liaison (16) un rouleau enrouleur agencé et conçu de sorte que les deux bandes de film (2, 3) soient enroulées sur le rouleau enrouleur à l'état reliées l'une à l'autre.

8. Dispositif selon la revendication 7, **caractérisé en ce qu'**il est prévu un rouleau dérouleur additionnel (23) pour la réception d'un rouleau de film à insérer de réserve (23) sur lequel sont enroulées avec un écart axial deux bandes de film à insérer (7, 8) constituées d'un film monocouche ou multicouche, dans lequel le rouleau dérouleur additionnel (23) est agencé de sorte que les bandes de film à insérer (7, 8) soient enroulées avec les bandes de film liées (2, 3) sur le rouleau enrouleur et de façon qu'une bande de film à insérer (7, 8) s'applique sur chaque bande de film (2, 3) en dehors de la zone de chevauchement (4).

9. Dispositif selon l'une quelconque des revendications 6 à 8, **caractérisé en ce que** des moyens de guidage sont prévus pour guider les bandes de film (2, 3) et/ou les bandes de film à insérer (7, 8) en particulier du côté extérieur et/ou **en ce que** les deux rouleaux de pressage (20, 21) sont placés sur le bâti (10) de façon à pouvoir être rapprochés et éloignés l'un de l'autre pour régler l'épaisseur de la fente de pressage.

10. Dispositif selon l'une quelconque des revendications 6 à 9, **caractérisé en ce que** les rouleaux dérouleurs (11, 12) et/ou les rouleaux de guidage (15) et/ou le rouleau enrouleur et/ou le rouleau dérouleur additionnel (22) sont placés de sorte à pouvoir être positionnés latéralement sur le bâti (10).

11. Dispositif selon l'une quelconque des revendications 6 à 10, **caractérisé en ce que** les stations de scellement et de collage (17, 18) sont agencées décalées l'une par rapport à l'autre dans un sens longitudinal des bandes de film (2, 3) et/ou perpendiculairement à un sens longitudinal des bandes de film (2, 3) et qu'en particulier les stations de scellement et de collage (17, 18) sont placées de façon mobile dans un sens longitudinal des bandes de film (2, 3) et/ou perpendiculairement à un sens longitudinal des bandes de film (2, 3), dans lequel, de préférence, les stations de scellement et de collage (17, 18) présentent chacune une tête de pulvérisation (17a, 18a) pour la pulvérisation de la matière de scellement ou de collage, les deux têtes de pulvérisation (17a, 18a) étant placées de façon mobile dans un sens longitudinal des bandes de film (2, 3) et/ou perpendiculairement à un sens longitudinal des bandes de film (2, 3).

12. Dispositif selon l'une quelconque des revendications 6 à 11, **caractérisé en ce qu'**il est prévu en amont du dispositif de liaison (16) un dispositif d'impression conçu et agencé pour imprimer une bande d'étanchéité s'étendant dans le sens longitudinal des bandes de film (2, 3) constituée d'une matière de scellement, en particulier d'un vernis de scellement, sur l'une des bandes de film (2, 3), s'étendant jusqu'à une bordure (2b) des bandes de film (2, 3) et/ou qu'il est prévu en amont du dispositif de liaison (16) un dispositif de rugosification conçu et agencé pour rendre rugueuse au moins l'une des bandes de film (2, 3) dans la zone de chevauchement (4) en vue d'augmenter la tension de surface.

13. Procédé de fabrication d'un film d'emballage (1), comprenant les étapes suivantes :
- deux bandes de film monocouche ou multicouche (2, 3) sont mises à disposition sur deux rouleaux de film de réserve agencés en parallèle (13, 14),
- les bandes de film (2, 3) sont déroulées et guidées à l'aide de rouleaux de guidage (15) de sorte à être, dans leurs zones périphériques intérieures (2a, 3a) tournées l'une vers l'autre, superposées en formant une zone de chevauchement (4),
- les deux bandes de film (2, 3) sont reliées l'une avec l'autre dans la zone de chevauchement (4),
**caractérisé en ce que** les deux bandes de film (2, 3) sont reliées entre elles dans la zone de chevauchement (4) en
- appliquant, en particulier par pulvérisation, sur une zone périphérique intérieure (2a) de l'une des bandes de film (2, 3), en particulier de la bande de film intérieure (2), en juxtaposition, une bande de scellement (6) et une bande adhésive (5), s'étendant parallèlement l'une par rapport à l'autre dans le sens longitudinal des bandes de film (2, 3) et
- de sorte que les zones périphériques intérieures (2a, 3a) des deux bandes de film (2, 3) se superposent ensuite en formant une zone de chevauchement (4), et que les deux bandes de film (2, 3) soient comprimées l'une contre l'autre dans la zone de chevauchement (4).

14. Procédé selon la revendication 13, **caractérisé en ce que** les bandes de film (2, 3) reliées entre elles sont enroulées sur un rouleau enrouleur, dans lequel sont enroulées en particulier avec les bandes de film liées (2, 3) deux bandes de film à insérer (7, 8) dont l'une d'elles est respectivement positionnée en dehors de la zone de chevauchement (4) sur l'une des bandes de film (2, 3).

15. Procédé selon la revendication 13 ou 14, **caractérisé en ce qu'**avant l'application de la bande de scellement (6) et de la bande adhésive (5), une bande d'étanchéité réalisée dans une matière de scellement, en particulier un vernis de scellement, s'étendant dans le sens longitudinal des bandes de film (2, 3) est appliquée sur l'une des bandes de film (2, 3), de préférence par impression, de manière que la bande d'étanchéité s'étende jusqu'à la bordure (2b) de l'une des bandes de film (2, 3) et que la bande de scellement (6) soit appliquée au voisinage de cette bordure (2b).
